# EUROPEAN PATENT APPLICATION

(11) **EP 1 379 055 A1**
(43) Date of publication of application: **07.01.2004**
(21) Application number: 03396066.7
(22) Date of filing: 26.06.2003
(51) Int. Cl.: H04L 29/08

(54) **Control of packet switched connection**

(30) Priority: 01.07.2002 FI 20021300
(71) Applicant: TeliaSonera Finland Oyj, 00510 Helsinki (FI)
(72) Inventor: Gurtov, Andrei, 01450 Vantaa (FI); Raitola, Mika, 02430 Masala (FI)
(74) Representative: Äkräs, Tapio

(57) **Abstract**

A method of controlling a packet switched connection and a telecommunications system node (30) configured to forward data packets sent by a first party (50) to a second party (10) via the system node, when the first party and the second party have a packet switched connection between them, and forward a reset packet from the second party (10) to the first party (50), the reset packet indicating to the first party to abort the sending of the data packets, wherein the system node (30) is also configured to examine packets, and in response to detecting a reset packet, abort the delivery of data packets, which originate from the first party (50) to which the reset packet is addressed, to the second party (10) from which the reset packet was sent.

## Description

### FIELD OF THE INVENTION

The present invention relates to controlling a packet switched connection.

### BACKGROUND OF THE INVENTION

An active Internet user often aborts ongoing TCP (Transmission Control Protocol) connections by clicking from page to page in a web browser. Due to significant amount of buffering found in networks, data from aborted TCP connections is still transmitted to the user for a while. However, old data buffered in the network has become obsolete and will be discarded if delivered to the receiver. The transmission of such obsolete data wastes transmission capacity.

When the receiving party wants to abort a TCP connection, it sends a reset (RST) packet to the sender. Data packets from aborted TCP connections that are still transmitted to the receiving party will generate RST packets at the receiving party, which also waste transmission capacity in the opposite direction.

The above problems become more significant if there is one or more "bottleneck" links, i.e. links that have a low data transmission rate, between the sending party and the receiving party. An example of such a case is a mobile station connected to the Internet or similar network via e.g. a GPRS (General Packet Radio Service) connection or corresponding access link. The GPRS connection is provided by a serving GPRS support node (SGSN), which serves a GPRS mobile station by delivering data packets via a base station subsystem and air interface. The GPRS support node also typically buffers data that is to be delivered to the mobile station. Another example is a terminal, such as a PC, connected to the Internet via a DSL (digital subscriber line), for example.

The transmission of data packets from aborted TCP connections should preferably be avoided over the slow access link because rapid changes in the TCP connections caused by e.g. rapid clickings from page to page in a web browser will generate significant delay for the end-user due to the typically high amount of buffering and because the transmission of obsolete information wastes the transmission capacity of the slow access link.

One solution to alleviate the problem is to keep the amount of buffered data in the network to the necessary minimum by limiting the buffer space on the network side. Limiting the amount of buffered data in the network does not, however, completely avoid unnecessary transmission of obsolete data packets from aborted connections.

### BRIEF DESCRIPTION OF THE INVENTION

An object of the present invention is thus to provide a method and an apparatus for implementing the method so as to overcome the above problem or at least to alleviate the problem. The objects of the invention are achieved by a method and a telecommunications system node, which are characterized by what is stated in the independent claims 1 and 12. The preferred embodiments of the invention are disclosed in the dependent claims.

The invention is based on the idea of examining packets in a system node associated with a bottleneck link, and in response to detecting a reset packet in the node, aborting in the node the delivery of data packets to the receiving party connected to the system via the link. In an embodiment of the invention the system node is a network node. In a further embodiment of the invention the system node is a terminal.

An advantage of the method and arrangement of the invention is that the transmission of obsolete data packets from aborted connections can be prevented by removing such data packets before they are transmitted over the link. Furthermore, the invention is easy to implement into existing systems and can provide substantial efficiency savings as the transmission capacity of a slow access link is not wasted.

### BRIEF DESCRIPTION OF THE DRAWINGS

In the following the invention will be described in greater detail by means of preferred embodiments with reference to the accompanying drawings, in which
Figure 1 is a block diagram of a telecommunications system in which the invention can be used and
Figure 2 is a flow chart illustrating an embodiment of the invention.

### DETAILED DESCRIPTION OF THE INVENTION

The invention is applicable in various packet switched telecommunications systems. Such systems include mobile communication networks, fixed networks and combinations thereof. In the following the invention is described in connection with a system utilizing TCP/IP (Transmission Control Protocol/Internet Protocol) but other protocols may also be used.

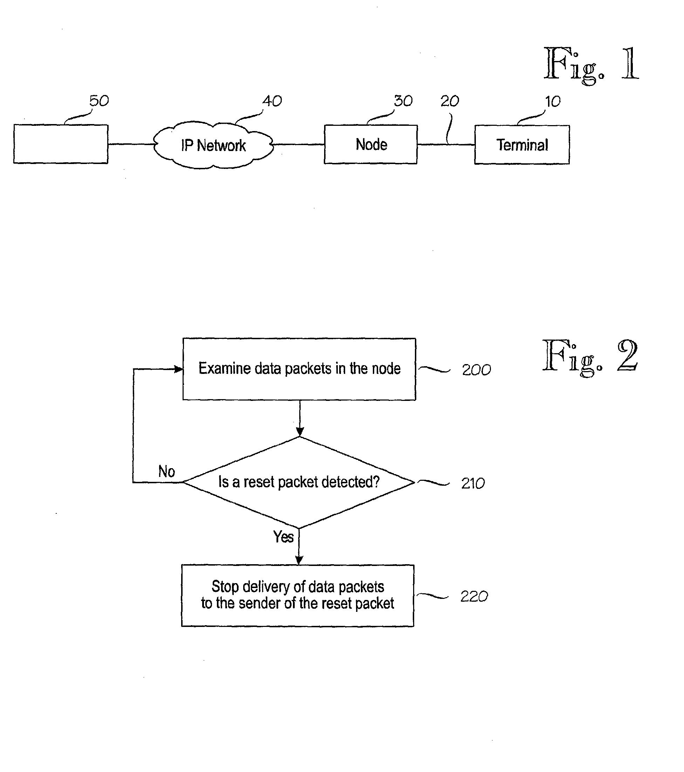

Figure 1 illustrates a simplified block diagram of a telecommunications system in which the invention can be used. It is to be noted that, for the sake of clarity, the figure only shows components relevant to the invention. In the figure a terminal 10 (or any device communicating with network 40) is connected to IP network 40 via a node 30. Thus, the node 30 provides an access for the terminal 10 to the IP network and elements 50 connected to or within the IP network. Between the terminal 10 and the node 30 there is a link 20. The terminal can be a wireless device, such as a mobile station, or a fixed terminal, such as a PC. In a similar manner, the link 20 can be an air interface or a fixed connection. Instead of a single link 20, there can be several links. The link 20 can be a modem link or based on e.g. any of the following techniques: GPRS, GSM, HSCSD (High Speed Circuit Switched Data), UMTS (Universal Mobile Telecommunications System), EDGE (Enhanced Data rates for Global Evolution) and/or xDSL (Digital Subscriber Line, such as ADSL), for example. The invention is especially useful in connection with cellular networks, such as GPRS and UMTS, where buffering delays are high and transmission bandwidths low. The invention is not bound to the use of any specific system, however. The node 30 can be any system element providing the access for the terminal 10, such as a router. For example, in a GPRS system the node 30 can be a GPRS support node (SGSN) and in a UMTS system the node 30 can be a radio network controller (RNC). In practice, other system elements may be located between said network elements, depending on the structure and type of the system. However, the operation of these network elements is not relevant to the present invention, and is therefore not described in greater detail.
The terminal 10 has a packet switched connection, e.g. a TCP connection using IP, to the element 50. The element 50 presents a system element providing data to the terminal 10 and can belong to a system of an Internet service provider, for example. The invention can be used in connection with any application utilizing a packet switched connection. Examples of possible TCP applications include WWW (World Wide Web), such as HTTP (Hyper Text Transfer Protocol), FTP (File Transfer Protocol), e-mail, telnet and so on. When the connection is active, data is delivered in packets from the element 50 to the terminal 10. When the terminal 10 wants to abort the connection, it sends a reset (RST) packet to the element 50. A reset packet according to TCP is a packet having a reset (RST) bit set in the TCP header. However, within this application the term 'reset packet' should be understood broadly and generally refers to a data packet, which is used for indicating to the sending party to abort the sending of data packets. Figure 2 illustrates a flow chart of the operation of the node 30 according to an embodiment of the invention. According to an embodiment of the invention, the node 30 examines (step 200) data packets, preferably the TCP headers of the packets that it forwards from the terminal 10 towards the system element 50. When the node 30 detects (step 210) a reset packet sent by the terminal 10, it aborts (step 220) the delivery of data packets coming from the system element 50 to the terminal 10. If the node 30 has a data buffer for buffering the data packets it delivers to the terminal 10, it preferably also drops all the buffered data packets which originate from the system element 50 and which are addressed to the terminal 10. The node can identify the data packets belonging to the same connection and whose delivery is to be aborted and/or which are to be removed from the buffer by an IP source and/or destination address contained in an IP header of a data packet and/or by TCP source and/or destination port information contained in a TCP header of a data packet. In other words, the node 30 preferably stops sending such data packets to terminal 10, which have an IP destination address and/or TCP destination port corresponding to that of the terminal 10 (i.e. the receiving party) and which have an IP source address and/or TCP source port corresponding to that of the system element 50 (i.e. the sending party). Furthermore, the node 30 preferably removes such data packets from its buffer. The node 30 then preferably forwards the reset packet to the system element 50 to ensure that the system element also aborts the connection and stops sending data packets.

In case the reset packet forwarded to the system element 50 gets lost and the system element does not receive it, the system element 50 will retransmit a data packet. According to an embodiment of the invention, when the node 30 receives a retransmitted packet from the system element addressed to the terminal 10, it does not discard such a retransmitted data packet but forwards it to the terminal 10. A new reset packet will be generated by the terminal 10 and sent to the system element 50. According to another embodiment of the invention, when the node 30 receives a retransmitted packet from the system element addressed to the terminal 10, it will retransmit a suitable reset packet to the system element 50.

The functionality according to the invention can be implemented for example with suitable software changes in existing system elements such as the node 30, which can be e.g. a GPRS support node or a radio network controller, as described earlier. It is also possible to implement the invention with a specific separate system element without deviating from the basic idea of the invention.A system node implementing the principles of the present invention can also be the terminal 10. The terminal forwards the traffic towards the system from a user application program associated with the terminal or from a data terminal, such as computer (not shown) connected to the terminal. In that case the bottleneck may situate in the terminal 10. Therefore, in an embodiment of the invention the actions according to the invention are performed in the terminal 10, e.g. the terminal 10 looks for RTS packet going to the uplink direction and deletes any uplink packets in the buffer. The operation of the terminal may thus be similar to the operation of the node 30 described above and illustrated in Figure 2.

It will be obvious to a person skilled in the art that, as the technology advances, the inventive concept can be implemented in various ways. The invention and its embodiments are not limited to the examples described above but may vary within the scope of the claims.

## Claims

1. A method of controlling a packet switched connection between a first party and a second party in a telecommunications system, the method comprising:
delivering data packets sent by the first party to the second party via a node, and
indicating to the first party to abort the sending of the data packets by sending a reset packet from the second party to the first party via the node, **characterized by**
examining packets in the node, and
in response to detecting a reset packet in the node, aborting in the node the delivery of data packets, which originate from the first party to which the reset packet is addressed, to the second party from which the reset packet was sent.

2. The method of claim 1, **characterized in that** data packets to be delivered to the second party are buffered at the node, whereby
in response to detecting a reset packet at the node, discarding at the node all the buffered data packets which originate from the first party to which the reset packet is addressed and which are addressed to the second party from which the reset packet was sent.

3. The method of claim 1 or 2, **characterized by** forwarding a detected reset packet from the node to the first party to which the reset packet is addressed.

4. The method of claim 3, **characterized in that**, in response to receiving in the node a retransmitted data packet from the first party and addressed to the second party after forwarding the reset packet to the first party, retransmitting a reset packet from the node to the first party.

5. The method of claim 3, **characterized in that**, in response to receiving in the node a retransmitted data packet from the first party and addressed to the second party after forwarding the reset packet to the first party, forwarding such a retransmitted data packet to the second party.

6. The method of any one of claims 1 to 5, **characterized in that** the reset packet is a packet containing a reset bit which is set.

7. The method of any one of claims 1 to 6, **characterized in that** the connection between the first party and the second party is a TCP connection.

8. The method of any one of claims 1 to 7, **characterized in that** the protocol used for delivering packets is the Internet Protocol.

9. The method of claim 8, **characterized in that** the sender and/or addressee of a data packet is identified by an IP source and/or destination address and/or TCP source and/or destination port information contained in the packet.

10. The method of any one of claims 1 to 9, **characterized in that** the connection between the first party and the second party comprises one or more links provided by one or more of the following: a modem, GPRS, GSM, HSCSD, UMTS, EDGE and/or xDSL.

11. The method of any one of claims 1 to 10, **characterized in that** the node is a terminal.

12. A telecommunications system node configured to:
forward data packets sent by a first party (50) to a second party via the system node (10,30), when the first party and the second party have a packet switched connection between them, and
forward a reset packet from the second party to the first party (50) the reset packet indicating to the first party to abort the sending of the data packets, **characterized in that** the system node (10,30) is further configured to:
examine packets, and
in response to detecting a reset packet, abort the delivery of data packets, which originate from the first party (50) to which the reset packet is addressed, to the second party from which the reset packet was sent.

13. The system node of claim 12, **characterized in that** the system node (10,30) is further configured to:
buffer data packets to be delivered to the second party, and
in response to detecting a reset packet, discard all the buffered data packets which originate from the first party (50) to which the reset packet is addressed and which are addressed to the second party from which the reset packet was sent.

14. The system node of claim 12 or 13, **characterized in that** the system node (10,30) is further configured to forward a detected reset packet to the first party (50) to which the reset packet is addressed.

15. The system node of claim 14, **characterized in that** the system node (10,30) is further configured to, in response to receiving a retransmitted data packet from the first party (50) and addressed to the second party after forwarding the reset packet to the first party, retransmit a reset packet to the first party.

16. The system node of claim 14, **characterized in that** the system node (10,30) is further configured to, in response to receiving a retransmitted data packet from the first party (50) and addressed to the second party after forwarding the reset packet to the first party, forward such a retransmitted data packet to the second party.

17. The system node of any one of claims 12 to 16, **characterized in that** the reset packet is a packet containing a reset bit which is set.

18. The system node of any one of claims 12 to 17, **characterized in that** the connection between the first party (50) and the second party is a TCP connection.

19. The system node of any one of claims 12 to 18, **characterized in that** the protocol used for delivering packets is the Internet Protocol.

20. The system node of claim 19, **characterized in that** the system node (10,30) is configured to identify the sender and/or addressee of a data packet by an IP source and/or destination address and/or TCP source and/or destination port information contained in the packet.

21. The system node of any one of claims 12 to 20, **characterized in that** the system node (10,30) is a telecommunications system node.

22. The system node of claim 21, **characterized in that** the system node (30) is a GPRS support node.

23. The system node of any one of claims 12 to 20, **characterized in that** the system node (30) is a radio network controller.

24. The system node of any one of claims 12 to 20, **characterized in that** the system node (30) is a router.

25. The system node of any one of claims 12 to 20, **characterized in that** the system node is a terminal.
